# EUROPEAN PATENT SPECIFICATION

(11) **EP 1 028 630 B1**
(45) Date of publication and mention of the grant of the patent: **04.09.2002**
(21) Application number: 98955276.5
(22) Date of filing: 04.11.1998
(51) Int. Cl.: A23G 9/02, A23G 3/00, B32B 27/36

(54) **A SUPPORT AND A PROCESS FOR MANUFACTURING A SUPPORT**
STIEL UND VERFAHREN ZUR HERSTELLUNG EINES STIELS
SUPPORT ET PROCEDE DE FABRICATION CORRESPONDANT

(30) Priority: 04.11.1997 BR 9705412
(43) Date of publication of application: 23.08.2000
(73) Proprietor: Ima Do Brasil Importaçao e Exportaçao LTDA., 04546-043 Sao Paulo, SP (BR)
(72) Inventor: BARALDI, José, Helio, CEP-S o Paulo, SP (BR)
(74) Representative: Darby, David Thomas
(86) International application number: BR9800088
(87) International publication number: WO99022603

(56) References cited:
- EP-A- 0 616 906
- WO-A-93/08018
- FR-A- 2 446 604
- GB-A- 649 686
- US-A- 3 968 262
- US-A- 5 403 051
- US-A- 5 447 348
- PATENT ABSTRACTS OF JAPAN vol. 006, no. 011 (C-088), 22 January 1982 & JP 56 134965 A (SASAO CHUZO), 22 October 1981

## Description

### Background of the Invention

The present invention refers to a support, particularly a support-stick (usually called "palito" = stick), useable for supporting food products such as ice-cream, in order to form the so-called "picolé" (iced lolly) or else "pirulito" (lollipop). This invention further refers to the process of manufacturing said support.

As it is known from the prior art, support-sticks, especially for ice-creams, are made of wood, which causes a number of disadvantages during the manufacturing process and during the storage thereof. In specific terms, one can see that the support-sticks made of wood have an uneven and porous surface, being liquid-permeable. This characteristic favors the proliferation of fungi, which embed in the unevenness of the wood, contaminating the food product supported by the support-stick, especially ice-cream. In addition, the absorption of moisture by the wood causes its deformation ("encanoamento" = canoe-shaping) as time goes by, thus preventing the formation of stocks for a long period of time, which is especially detrimental to a sector of seasonal consumption, as is the case of ice-creams.

In addition, the support-sticks made of wood may have barbs which equally contaminates the ice-cream, and depending upon the origin or time of wood-cutting, substances (tannin, for instance) or other products associated to the support-stick might pass into the ice-cream and alter its taste.

The manufacturing processes which use wooden support-sticks may have drawbacks due to the variation of their size, which occurs with the change of the moisture rate of the environment. The problems occur mainly because the machines used in manufacturing ice-cream, for instance, work at a high rate of production and have very strict specifications of thickness, length, width and weight.

Furthermore, the disclosure of images or sayings on said support-sticks, which would be very advantageous in increasing the consumption of the respective food product, cannot be made in adequate way. This is because it is difficult, expensive to print them on wooden objects in a lasting way, without any guarantee of satisfactory results, due to the characteristic of porosity and unevenness of the material, which does not retain paint adequately. Besides, one should bear in mind that, among food products, especially ice-cream contains substances which can react with the printing paint such as water, fat, acidic fruit juice, etc.

Thus, the prints on the surface of the wood that are known at present basically limit themselves to the maker's mark or short phrases on the respective support-stick by pyrogravure.

An additional problem associated to the use of wooden support-sticks is represented by the need for these sticks to be wetted prior to application of frozen products, such as ice-cream mass, since the latter will only fix on the support-stick if the water absorbed by the wood freezes together with the ice-cream mass. This need represents an additional step, which makes the respective manufacturing process expensive and complicated.

In an attempt to solve at least some of the drawbacks indicated above, support-sticks made of plastic, particularly polyethylene, were proposed. However, this material does not allow the support-sticks to receive prints of image or sayings thereon, since the polyethylene surface does not offer good adherence of paint thereto, and there may be contamination of the ice-cream by particles of paint. These support-sticks of polyethylene are sometimes totally pigmented in a single color, but there may be transfer of paint into the respective product.

One of the solutions known from the state of art is described in document US 5.403.051, which describes a plastic stick for forming ice confections. According to this document, the plastic stick is manufactured with an outer layer having its surface roughened to hold the ice confection steady. Further, according to this document, the plastic stick can have punched or moulded holes to also hold the ice confection steady. Another embodiment described on said north American document, includes multiple layers of material to increase resistance of the plastic stick when lowering its temperature when in contact with the ice confection. However, according to the teachings of document US 5.403.051, it is not foreseen the painting of images or sayings over said stick.

### Objectives of the Invention

One of the main objectives of the present invention is to provide a support, particularly a support-stick which does not have the above-mentioned drawbacks, said support-stick being structured so as to present a smooth unevenness-free surface, which permits the printing of long-lasting images and/or sayings in various colors, without the risk of contaminating the product in contact with the support with paint from the printing.

This objective is achieved by means of a support, particularly suitable for supporting food products, such as ice-cream, which is substantially elongated and characterized by being formed by at least two layers of different materials.

The present invention further refers to a process for manufacturing a support particularly suitable for supporting food products such as ice-cream, which is substantially planar and elongated, characterized by being formed by at least one inner layer and a transparent outer layer, said layers being made of different materials. This manufacturing process comprises at least the following steps: extruding and calendering the inner layer; printing with paint at least one of the faces of the inner layer; covering the printed face of the inner layer with a layer of heated molten polymeric adhesive; and applying the outer layer onto the heated adhesive.

### Detailed Description of the Invention

The present invention will now be described in greater detail with reference to the accompanying drawings, in which:

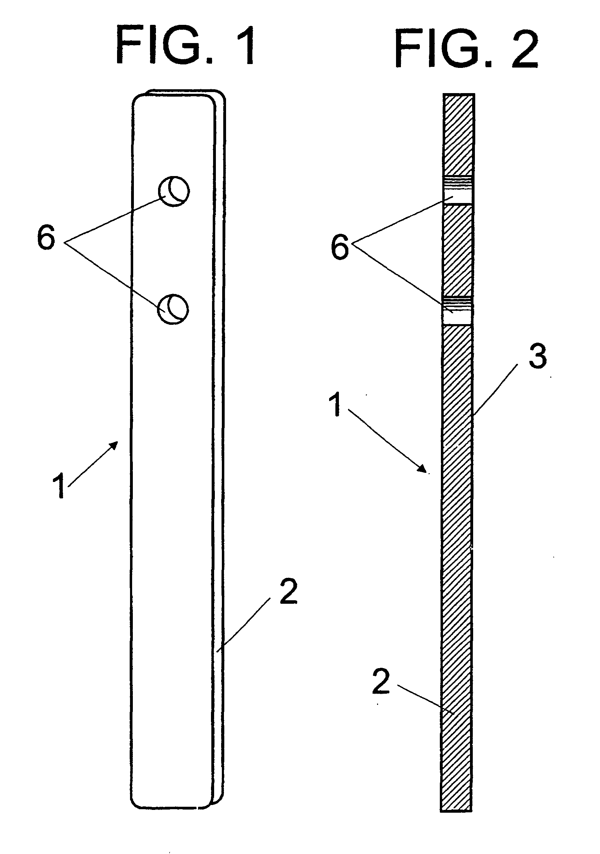

- figure 1 is a perspective view of a support, particularly a support-stick, which represents a preferred embodiment of the present invention; and
- figure 2 is a side view of a section of the support of figure 1.

According to the teachings of the present invention, the support-stick 1 is manufactured from a synthetic material that is tasteless and odorless, unlike some of the wooden types, as already mentioned. The support-stick 1 comprises three layers of synthetic material, cut so as to assume an elongated shape, which favors the supporting of a food product such as ice-cream (forming the so-called "picole" = iced lolly). Preferably, this embodiment is also planar and narrow.

The inner layer 2 is preferably constituted by non-toxic high impact polystyrene reinforced with elastomer, so as to offer resistance to breakage by impact or to bending under low temperature (which may reach -45° C when the support-stick 1 is used in association with ice-cream).

According to the present invention, the inner layer 2 will also receive printing with non-toxic paint in 4×4 colors.

Transparent outer layers 3 are foreseen, which cover both faces of the layer 2 and which are preferably impermeable and made of non-toxic polyester, since they come into contact with the products associated to the support-stick 1 and also have the function of covering the surface of the inner layer 2 printed with paint, forming a barrier which prevents contact of the latter with said product.

The support-stick 1 is preferably provided with one or more bores 6 arranged along its axis, for the purpose of fixing the respective food product on the support-stick 1 in a better way, in spite of the smooth surface of the outer layers 3. Particularly when the ice-cream is associated to the support-stick 1, the mass of the former penetrates the bores 6, which prevents it from displacing. Of course, the shape of the bores 6 may be modified without altering their function. In addition, the bores may be replaced with notches or tears (not shown) of any shape, provided at the borders of the support-stick 1.

Further according to the teachings of this invention, the process of manufacturing the support-stick 1 comprises the following steps:

A plate (not shown) of high impact polystyrene, reinforced with elastomer, is prepared by extrusion and calendering processes, which enable one to adjust its thickness in hundredths of a millimeter (0,01mm). Such a plate will constitute the inner layer 2 of the support-sticks 1.

The thus prepared plate receives the printing of paint which is cured by exposition to ultraviolet rays (UV). The painted plate is then covered on both faces with a layer of solvent-free molten polymeric adhesive. On this adhesive, preferably still heated, one applies polyester, thus forming the outer layers 3 of the support-sticks 1.

The whole assembly is taken to a press, in order to obtain good adherence of all the layers.

Finally, when the plate is ready, the final shape of the support-stick 1 is cut and perforated with a cutting and drawing tool, by which it is possibly to have control over the dimensions of width and length down to a hundredth of a millimeter. This process also enables one to achieve good control over the weight, as compared with wood, reaching a precision of 0,2 grams per unit. Besides, press cutting does not produce any barbs or particles of material, which occur cutting with a saw and which represent a relevant problem, especially in the food industry.

According to an embodiment of this invention, the layer 2 is covered with a printing of paint in various patterns and may comprise figures that can be collected or even intended for games. Further according to a preferred embodiment of this invention, fittings are provided which will be used in conjunction with the support-sticks 1 after the ice-cream or another product has been consumed.

Among the fittings, a socket (not shown) is provided for arranging the support-sticks 1 in the form of a fan, favoring its replacement or the placing of sets thereof, since the user then has better view of the respective figures of each support-stick 1. The support-sticks 1 may also be fixed to a collar (not shown), so that the user can exhibit a set of them at the same time, each with figures or sayings having a particular attraction potential.

Another variation of fittings is an album (not shown) designed for orderly supporting the exhibition and organization of support-sticks 1 in pocket devices made of a transparent material. By virtue of a visual distinction between the support-sticks 1, the latter will have an aggregate value after performing their original supporting function.

One should bear in mind that the above description refers only to a preferred embodiment of the present invention, the scope of which is defined exclusively by the accompanying claims, including the possible equivalents.

## Claims

1. A support (1), particularly usable in supporting food products such as ice-cream, which has a substantially elongated shape, the support comprising a first layer (2) and at least one second layer (3), the layers (2, 3) being made of different synthetic materials, the support being **characterized in that** the second layer (3) is laid over said first layer (2) and is made of transparent material and at least part of said first layer (2) is covered with paint.

2. A support (1) according to claim 1, **characterized in that** it has a substantially plane and narrow shape, the first layer (2) being of high impact polystyrene reinforced with elastomer, the support (1) being made of polyester.

3. A support according to claim 1 or 2, **characterized by** comprising at least one bore or cut-out (6)

4. A process for manufacturing a support (1) particularly suitable for supporting food products such as ice-cream, being substantially planar and elongated, **characterized by** being formed by at least one inner layer (2) and a transparent outer layer (3), said layers (2, 3) being made of different materials, said manufacturing process comprising at least the following steps:
- extruding and calendering the inner layer (2);
- printing with paint on at least one of the faces of the inner layer (2);
- covering the printed face of the inner layer (2) with a layer of heated molten polymeric adhesive; and
- applying the outer layer (3) onto the heated adhesive.

5. A process according to claim 4, **characterized by** additionally comprising a step of pressing the support (1).

## Patentansprüche

1. Stiel (1) insbesondere zum Stützen bzw. Tragen von Lebensmitteln wie z.B. Speiseeis,
wobei der Stiel (1) im wesentlichen eine längliche Form hat,
wobei der Stiel (1) eine erste Schicht (2) sowie wenigstens noch eine zweite Schicht (3) enthält,
wobei die Schichten (2, 3) aus unterschiedlichen synthetischen Materialien hergestellt sind,
**dadurch gekennzeichnet,**
**dass** die zweite Schichte (3) über der ersten Schicht (2) angebracht ist,
**dass** die zweite Schicht (3) aus durchsichtigem Material hergestellt ist,
und **dass** zumindest Teile der ersten Schicht (2) mit Farbstoff bedeckt sind.

2. Stiel (1) nach Patentanspruch 1,
**dadurch gekennzeichnet,**
**dass** er eine im wesentlichen flache und schlanke Form hat,
**dass** die erste Schicht (2) mittels hochschlagfestem Polystyrol hergestellt ist, das seinerseits mit einem Elastomer verstärkt ist,
und **dass** der Stiel (1) aus Polyester hergestellt ist.

3. Stiel (1) nach Patentanspruch 1 oder 2,
**dadurch gekennzeichnet,**
**dass** er mindestens ein einziges Loch (6) durch Ausbohren oder Ausstanzen enthält.

4. Verfahren zur Herstellung eines Stieles (1), insbesondere zum Stützen bzw. Tragen von Lebensmitteln wie z.B. Speiseeis,
wobei der Stiel (1) im wesentlichen eine flache und längliche Form hat,
**dadurch gekennzeichnet,**
**dass** der Stiel (1) mittels wenigstens einer inneren Schicht (2) sowie mittels einer durchsichtigen äußeren Schicht (3) hergestellt wird, wobei für diese Schichten (2, 3) unterschiedliche Materialien angewendet werden und wobei zur Herstellung mindestens die folgenden Schritte benutzt werden:
- Strangpressen und Kalandern der inneren Schicht (2),
- Aufdrucken einer Farbe auf mindestens einer Seite der inneren Schicht (2),
- Bedecken der bedruckten Seite der inneren Schicht (1) mit einer Schicht aus erhitztem geschmolzenen polymerischen Klebstoff,
- und Anbringen der äußeren Schicht (3) auf dem erhitzten Klebstoff.

5. Verfahren nach Patentanspruch 4,
**dadurch gekennzeichnet,**
**dass** der Stiel (1) zusätzlich gepreßt wird.

## Revendications

1. Support (1), notamment utilisable pour supporter des produits alimentaires tels que des glaces, et qui possède une forme sensiblement allongée, le support comprenant une première couche (2) et au moins une seconde couche (3), les couches (2, 3) étant réalisées en des matériaux synthétiques différents, le support étant **caractérisé en ce que** la seconde couche (3) est déposée sur la première couche (2) et est réalisée en un matériau transparent et au moins une partie de la première couche (2) est recouverte de peinture.

2. Support selon la revendication 1, **caractérisé en ce qu'**il possède une forme sensiblement plate et étroite, la première couche (2) est en polystyrène de résistance aux impacts élevée renforcé par un élastomère, le support (1) étant réalisé en polyester.

3. Support selon la revendication 1 ou 2, **caractérisé en ce qu'**il comprend au moins un orifice ou une découpe (6).

4. Procédé pour fabriquer un support (1) particulièrement utilisable pour supporter des produits alimentaires tels que des glaces, étant sensiblement plat et allongé, **caractérisé en ce qu'**il est formé par au moins une couche intérieure (2) et une couche transparente extérieure (3), lesdites couches (2, 3) étant réalisées en des matériaux différents, ledit procédé de fabrication comprenant au moins les étapes suivantes :
- extrusion et calandrage de la couche intérieure (2),
- impression avec de la peinture d'au moins l'une des faces de la couche intérieure (2),
- recouvrement de la face imprimée de la couche intérieure (2) avec une couche d'adhésif polymérique fondu et chauffé,
- application de la couche extérieure (3) sur l'adhésif chauffé.

5. Procédé selon la revendication 4, **caractérisé en ce qu'**il comprend en outre une étape de compression du support (1).
